# EUROPEAN PATENT APPLICATION

(11) **EP 2 127 533 A1**
(43) Date of publication of application: **02.12.2009**
(21) Application number: 08157026.9
(22) Date of filing: 27.05.2008
(51) Int. Cl.: A23F 5/40

(54) **Soluble coffee-based composition and instant beverage**

(71) Applicant: Nestec S.A., 1800 Vevey (CH)
(72) Inventor: Paiva, Fernando Pereira, 1400 Yverdon-les-Bains (CH); Furrer, Markus Hubert, 1807 Blonay (CH); Rosse, Marcel, 2024 Saint-Aubin-Sauges (CH); Audouin, Valérie Patricia, 1350 Orbe (CH); Barblan, Alain, Ho Chi Minh Ville (VN)
(74) Representative: Cogniat, Eric Jean Marie

(57) **Abstract**

An instant soluble coffee-based composition suitable for providing an instant beverage upon reconstitution in a liquid is disclosed. This composition comprises co-extracted roasted-and-ground coffee and soya. A process for manufacturing a coffee and soya co-extract is also disclosed.

## Description

### TECHNICAL FIELD

The invention relates to an instant soluble coffee-based composition which is suitable for providing an instant coffee beverage upon reconstitution in a liquid, usually in water.

### BACKGROUND OF THE INVENTION

Some countries in South-East Asia, especially Vietnam, have a strong coffee culture. Consumers often drink coffee out of home, in coffee shops, as this mode of consumption has a strong social and leisure component. Nonetheless, they also drink coffee at home. Contrary to what is observed in most European countries where usually coffee is drunk hot, many consumers in Vietnam prefer cold coffee over hot coffee.

In Vietnam, coffee is prepared by brewing a special mix of roasted and ground coffee with further ingredients, according to a specific brewing method. The coffee mix often comprises further ingredients such as soya, corn, red beans, pea, rice or papaya kernels. In fact, it seems like each coffee shop has its own recipe for the coffee mix.

Then, the coffee mix is brewed according to a traditional brewing method which can be summarized as follows:
- Put a dose (approx. 25 g) of roasted and ground coffee mix in an aluminium coffee filter,
- Press tightly the coffee mix,
- Pour a first volume (approx. 30 mL) of boiling water into the filter, cover with the filter lid and let the brew drip out of the filter into a recipient,
- Pour a second volume (approx. 50 mL) of boiling water into the filter, cover with the filter lid and let the brew drip out of the filter into the recipient.

Afterwards, customers usually add sugar, sometimes milk, as well as ice should they desire a cold coffee drink. The composition of the coffee mix and the brewing method both have an impact on various sensory attributes of the coffee drink, such as aroma, taste, mouthfeel, body or colour.

Among these attributes, when comparing traditionally prepared coffee with commercially available soluble coffees, it seems that the Vietnamese consumers prefer a coffee that is much thicker and darker, has more bitterness, a stronger aroma, a full-bodied taste, and is less acid.

Moreover, the traditional brewing method comprises many successive steps and requires the use and maintenance of many kitchen tools.

Up to now, soluble coffee manufacturers have mainly aimed at proposing soluble coffee that matches closely the sensory attributes of Italian espresso or those of freshly brewed coffee from pure roasted and ground coffee. Other objectives have been to provide various kinds of "white cup" soluble coffee such as cappuccino or macchiato. However, these varieties of coffee beverages generally do not correspond to the sensory requirements of Vietnamese consumers.

There are many patent publications that relate to the coffee technology, from the step of roasting the coffee beans to the preparation of coffee extracts, the recovery of coffee aromas and manufacture of soluble coffee powder.

EP 0482236 A1 as well as EP 0466955 A1 relate to a process for the production of powdered soluble instant coffee. WO 2006/125505 A1 relates to a process for reducing the bitterness of a coffee product. WO 99/52378 A1 or U.S. patents US 5,229,153 and US 4,324,808 relate to processes for the recovery of aroma components from coffee. U.S. patent US 3,532,506 mainly discloses a process for preparing freeze-dried extract of coffee, using a stream of carbon dioxide to strip the volatile aromatic constituents and the fatty constituents from roasted and ground coffee.

Various publications disclose soluble coffee powders where the taste, aroma or other sensory attributes, are modified with respect of black coffee. For instance, EP 1201135 A1 discloses a method for improving acceptability of black coffee with young people, by incorporating tea flavour in an un-whitened soluble coffee powder.

Other publications disclose processes for producing coffee-like soluble powders comprising non-coffee ingredients. Usually, the aim is to provide an instant beverage the taste, aroma and flavour of which are comparable to that of freshly brewed pure coffee, at a lower price. For instance, U.S. patent US 4,072,765 relates to a coffee-like beverage which is prepared by brewing a composition containing 40-60 wt.% of roasted coffee, 35-55 wt.% of roasted and comminuted wheat and 3-6 wt.% of hydrolyzed starch material having a D.E. (dextrose equivalent) of 5-19.

Another example is EP 0006646 A1 which relates to a coffee-like soluble dry mix which has an orthodox coffee flavour, taste and aroma. This mix comprises 15-98 wt.% of refined grain extract powder, 0-84 wt.% of coffee base extract powder and 0.05-3 wt.% of cryogenically collected coffee aroma flavour compounds. The refined grain extract is produced by removing grainy flavour and aroma constituents from the grain or from an aqueous grain extract. Thus, the refined grain extract powder constitutes a matrix without flavour or aroma, which is mixed with the coffee aroma and flavour compounds.

Finally, another example is EP 0585632 A1 which relates to a food product and to its preparation method. This product is in the form of soya beans which are coated with a carbohydrate compound, then roasted and ground. After extraction, a beverage may be obtained.

However, it appears that there remains a need of an instant coffee beverage that has sensory attributes matching those of a Vietnamese coffee prepared traditionally.

### SUMMARY OF THE INVENTION

Accordingly, it is an object of embodiments of the invention to provide an instant coffee beverage that matches the specific sensory attributes of traditional Vietnamese coffee.

Another object of embodiments of the invention is to provide an instant coffee beverage which delivers similar sensory attributes whether the resulting coffee beverage is consumed hot or cold.

Another object of embodiments of the invention is to provide a convenient method for the preparation of a coffee beverage, be it at home or out of home, matching the sensory attributes of traditional Vietnamese coffee.

Another object of embodiments of the invention is to provide a new instant coffee beverage which has pleasant and constant sensory attributes, including taste or aroma.

To this end, an embodiment of the invention proposes a soluble coffee-based composition which is suitable for providing an instant coffee beverage upon reconstitution in a liquid, the sensory attributes of which instant coffee beverage match closely those of a traditionally prepared Vietnamese coffee. Said composition comprises a co-extract of roast and ground coffee and soya. In a preferred embodiment, the composition is in powder form.

In another embodiment, the invention relates to a process for preparing a soluble coffee-based composition suitable for providing an instant coffee beverage upon reconstitution in a liquid, hot or cold, said method comprising the steps of:
- providing a roast and ground coffee and soya co-extract, preferably in powdered form,
- mixing simultaneously or successively one or a plurality of the following ingredients: sugar, sweetener, buffering agent, flavour enhancer, aroma and/or flavour agent, with said co-extract.

In a further embodiment, the invention proposes a process for manufacturing a co-extract of roast and ground coffee and soya, comprising the steps of:
- roasting green coffee beans and soya beans,
- grinding said roasted coffee and soya beans,
- co-extracting the soluble solids from said ground coffee and soya beans.

Another embodiment of the invention is an instant coffee beverage which may be prepared by adding said soluble coffee-based composition in a liquid, such as hot or cold water, wherein the sensory attributes of said beverage match closely those of a traditionally prepared Vietnamese coffee.

These and other aspects, features and advantages of the invention will become apparent to those skilled in the art upon reading the disclosure provided here. The detailed description, while indicating preferred embodiments of the invention, is only given by way of illustration.

### DETAILED DESCRIPTION OF THE INVENTION

It must be noted that as used in this specification and the appended claims, the singular forms "a", "an", and "the" include plural referents unless the context clearly dictates otherwise. Unless defined otherwise, all technical and scientific terms herein have the same meaning as commonly understood by one of ordinary skill in the art to which this invention pertains.

Throughout the specification and the claims, the word "comprise" shall not be construed in a limited, exclusive or exhaustive meaning, unless the context clearly dictates otherwise. On the contrary, the word "comprise" indicates that components, steps or features not specifically listed may also be included with the components, steps or features it refers to.

The abbreviation "R&G" means roasted and ground.

Throughout the specification, when a reference is made to a liquid used for reconstitution of an instant soluble beverage, the word "liquid" refers to a liquid suitable for human consumption such as water, hot or cold. Other liquids such as milk may also be referred to.

All percentages are calculated by weight unless otherwise indicated. Unless otherwise indicated, all percentages are calculated based on the total composition.

The term "instant beverage" is used herein to mean that the desired beverage can be conveniently prepared by mixing a soluble coffee-based composition into a liquid, for instance by spooning some of said composition into water or else by pouring water on a soluble coffee-based composition.

The term "co-extract" or "co-extraction" is used herein to specify that some of the raw materials used when preparing the soluble coffee-based composition are extracted together. For instance, in a preferred embodiment of the invention, R&G coffee beans and R&G soya beans undergo extraction together: they are co-extracted.

The term "grounds" is used herein to designate the particles that result from grinding coffee beans or soya beans. The grounds are the raw material that may be used for preparing a co-extract.

The invention first relates to a soluble coffee-based composition that may dissolve into a liquid to yield an instant coffee beverage. Usually, the liquid is water. As is well-known in the field of soluble coffee compositions, proposing a soluble coffee composition greatly improves convenience for the consumers. Instead of going through a complex and long brewing method, such compositions provide an easy means for preparing a coffee beverage nearly instantaneously. Moreover, the manufacture of these soluble compositions is closely monitored. Thus, the composition's content is homogenous and constant from batch to batch. This also provides for an easy dosing of the soluble coffee-based composition when preparing the beverage.

In a preferred embodiment, the soluble coffee-based composition is in powdered form. Indeed, a powder usually has a longer shelf life than a concentrated liquid. Moreover, it is easier to dose when preparing a coffee beverage.

The main components of the soluble coffee-based composition are a co-extract of R&G coffee and soya, which will be called the coffee and soya base, and sweetener. In an embodiment of the invention, said coffee and soya base represents from about 20% to about 60% of the composition, more preferably from about 25% to about 40% of the composition, and still more preferably from about 30% to about 35% of the composition.

The preparation of the coffee and soya base or co-extract will be described below. In an embodiment of the invention, the coffee and soya base comprises from about 40% to about 60% of coffee solids and from about 40% to about 60% of soya solids. In another embodiment, the weight ratio of soya solids with respect of coffee solids (soya solids / coffee solids) in the coffee and soya base, ranges from about 0.75, preferably about 0.90, more preferably about 0.98, to about 1.3, preferably about 1.1 and more preferably about 1.02.

As will be seen below, due to the lower extractability of soya with respect of coffee, the soya solids / coffee solids ratio in the co-extract does not reflect directly the raw material ratio during co-extraction.

Thus, an embodiment of the invention also relates to a soluble powder which may be useful to prepare a soluble coffee-based composition, said powder comprising from about 40% to about 60% of coffee solids and from about 40% to about 60% of soya solids. In a preferred embodiment, the coffee and soya solids are co-extracted from roasted and ground coffee and soya beans.

Sweeteners may comprise natural and artificial sweeteners, caloric and non caloric sweeteners. The most common sweetener is sucrose, refined or semi-refined. Other sweeteners may also be used. As an example, other sweeteners include sucrose, glucose, fructose, maltodextrines, lactose, isomalt, maltitol, xylitol, tagatose, erythritol, isomaltulose, acesulfame potassium, aspartame, sucralose, glycyrrhizin, saccharin, monellin, thaumatin, miraculin, neotame, neohesperidine dihydrochalcone, alitame, sodium cyclamate and mixtures thereof. In particular, sweeteners mixtures may be used in order to balance the sweet sensorial perception and sometimes to create a synergistic effect on the sweet perception.

The soluble coffee-based composition may comprise one or a plurality of sweeteners, depending on the target sweetness of the beverage, the price, and the regulatory approval of the sweetener. In an embodiment of the invention, the composition comprises a single sweetener: sucrose. In another embodiment of the invention, the composition comprises two sweeteners or more. In an embodiment, the soluble coffee-based composition comprises mainly sucrose as a sweetener, together with other sweeteners. The soluble coffee-based composition may comprise from about 5% to about 70% of sweetener, for instance from about 5% to about 70% of sucrose. In a preferred embodiment, the soluble coffee-based composition comprises between about 50% to about 70% of sucrose, and more preferably, from about 60% to about 70% of sucrose. In addition to sucrose, the composition may comprise another sweetener, preferably acesulfame potassium. In a preferred embodiment, acesulfame potassium represents up to about 5% of the composition, and more preferable below about 1% of the composition.

The soluble coffee-based composition may comprise one or a plurality of the following food-grade ingredients:
- buffering agent,
- flavour enhancer,
- aroma and/or flavour agent.

Buffering agents are useful to adjust the pH of a solution and therefore to control acidity of the reconstituted instant beverage, as acidity is one sensory attribute which is disliked by consumers in Vietnam. Flavour enhancers are used to make food products tastier or more savoury. Contrary to aromas or flavour agents, flavour enhancers do not provide supplementary flavour to the product they are added to. These various ingredients are widely known in the food industry.

Buffering agents include among others: phosphate buffer, polyphosphate buffer, pyrophosphate buffer, sulphate buffer, carbonate buffer or citrate buffer. Examples of buffering agents are sodium, potassium or magnesium salts of phosphate, hydrogen phosphate, dihydrogen phosphate, pyrophosphate, polyphosphate, carbonate, hydrogen carbonate or citrate. Preferred buffering agents are sodium hydrogen phosphate and sodium hydrogen carbonate.

Flavour enhancers include sodium, potassium, magnesium or calcium salts of chloride and glutamate among others.

Aromas and flavour agents include among others aromas and flavours of coffee, tea, fruit, vanilla, cinnamon, butter.

In an embodiment of the invention, the soluble coffee-based composition comprises:
- less than about 1% of buffering agent, preferably less than about 0.5% of buffering agent,
- less than about 1% of flavour enhancer, preferably less than about 0.5% of flavour enhancer,
- less than about 1% of aroma and/flavour agent, preferably less than about 0.5% of aroma and/or flavour agent.

In another embodiment of the invention, the soluble coffee-based composition comprises from about 0.1% to about 0.25% of aroma and/or flavour agent. More preferably, the soluble-based composition comprises from about 0.05% to about 0.15% of coffee aroma and/or flavour.

For the preparation of the soluble composition, a coffee and soya base, preferably in powder form, is mixed with one or a plurality of the following ingredients: sweetener, buffering agent, flavour enhancer, aroma and/or flavour agent. For instance, the ingredients of the composition are dry mixed in a batch mixer such as a double screw batch mixer. Mixing of the ingredients may also be carried out using other types of dry-mixers such as a ribbon blender, a double cone mixer, a drum mixer, a tote-bin mixer, a vertical screw mixer or a continuous mixer. The ingredients may be added into the dry mixer one after the other. It is also possible that some of the ingredients be pre-mixed before being added into the main ingredients. Usually, it is advisable to prepare a premix of the ingredients which are present in small quantities in the final composition, for instance the ingredients which represent less than a few percents by weight of the final composition. Indeed dosing of a premix comprising a plurality of ingredients may be realized more easily and accurately than dosing each individual ingredients of the premix into the main ingredients of the composition. As an example, ingredients which represent less than 5% of the final composition may first be premixed, before dosing the appropriate amount of premix into the main ingredients of the final composition.

The manufacture of a co-extract of roast and ground coffee and soya -the coffee and soya base- may be done by implementing and adapting coffee extraction, concentration and drying procedures. Conventional soluble coffee powder is produced by spray-drying or freeze-drying after evaporation of a coffee extract obtained by the percolation of an extraction liquid through cells filled with ground roasted coffee (Sivetz, Coffee Processing Technology, Volume 1, pages 262, 263, AVI, 1963).

Adapting these conventional procedures was not straightforward because among other difficulties, soya has proved to be much less extractible than coffee, to swell during extraction and to become sticky and viscous under high temperatures.

First, coffee beans and soya beans are roasted, preferably separately. Then, the roasted coffee beans and soya beans are ground, also preferably separately. Roasting and grinding are well known procedures.

Afterwards, the roasted and ground coffee and soya are subjected to co-extraction. Suitable extraction procedures are described in European patent applications EP 0466236 A1, EP 0466955 A1, EP 0826308 A1 or EP 0916267 A1, the disclosures of which are incorporated by reference.

Preferably, co-extraction of R&G coffee and soya beans is realized in an installation wherein an extraction liquid is percolated in counter-current fashion through a plurality of extraction cells filled with R&G coffee and soya. Usually, the extraction liquid is hot water. The final extract may then be concentrated and converted into powder form.

The extraction cells are connected in series by piping between the individual cells. The roast and ground coffee may be of various high, intermediate, or low quality coffees, or mixtures thereof. Typically, six cells are found in a counter-current extraction installation. However, it should be understood that more or less than six cells may be used as well. The extraction cells are equipped with filters positioned adjacent to the extraction liquid inlet and outlet, to prevent the grounds from being driven out of the extraction cells by the extraction liquid. The last three cells, i.e. those containing the most spent coffee and soya R&G beans, are referred to as the hydrolysis cells or hot cells, while the next two cells which contain coffee and soya R&G beans of an intermediate degree of spentness are the extracting cells, and the first cell which contains the freshest coffee and soya R&G beans is referred to as the fresh extraction cell. The last three cells may also be referred to as the cold cells.

Thus, the fresh extraction liquid enters the extraction installation in a hot extraction cell where the coffee and soya R&G beans are the most spent, it is percolated through the extraction cells towards the cold extraction cells. Finally, the extract leaves the extraction installation after having been through the fresh extraction cell where the coffee and soya R&G beans are freshest. There is a gradient of temperature through the hot and cold cells. Temperature of the extraction liquid drops from the first hot cell to the last hot cell, as well as from the first cold cell to the last cold cell.

It has proved necessary to reduce the extraction temperatures both in the hot extraction cells and cold extraction cells, due to the presence of ground soya in addition to ground coffee. The advantage of a high extraction temperature is that it increases the extraction rate. However it was found out that the soya extracts are quite sticky. The inlet and the outlet of the extraction cells are equipped with filters to prevent the grounds from flowing out of the cells. Due to their stickiness, the soya extracts tend to increase fouling and clogging of the inlet and outlet filters. Hence, it proved necessary to reduce the extraction temperatures both in the hot and cold cells when compared to extraction temperatures of coffee alone.

Therefore, the extraction temperature in the hot cells -the hot extraction temperature- is preferably below about 175°C, and more preferably below about 170°C. The hot extraction temperature is greater than the extraction temperature in the cold cells. Preferably, the hot extraction temperature is greater than about 130°C, more preferably greater than 140°C. In fact, the temperature in the hot cells may drop by about 20°C to about 30°C between the first hot extraction cell (inlet of fresh extraction liquid in the most spent grounds) to the last extraction cell. In an embodiment, the temperature in the first hot cell is greater than about 150°C, more preferably greater than 160°C.

Concurrently, the extraction temperature in the cold cells -the cold extraction temperature- is preferably below about 120°C, and more preferably below about 110°C. Further, the cold extraction temperature is preferably greater than about 95°C. Similarly, the cold extraction temperature decreases from the first cold cell to the last cold cell (which contains fresh grounds), by about 10°C to about 20°C.

It has been found that filling or loading the extraction cells with alternating layers of coffee grounds and soya grounds is preferable. Maybe this is because it mitigates the undesirable consequences of the swelling undergone by soya in hot water. Preferably, the first and last layers, at each extremity of the extraction cells, should be R&G coffee layers. Such a configuration provides a protection of the installation against clogging of the filters and build-up by avoiding direct contact between said filters and soya grounds. A preferred filling of the extraction cells comprises three layers: a first layer of R&G coffee in contact with the filter positioned at the extraction liquid inlet, then a layer of R&G soya, and a second layer of R&G coffee comprising the remainder of the coffee load, in contact with the filter positioned at the extraction liquid outlet.

Due to the lower extractability of soya with respect of coffee, the soya/coffee weight ratio of the load in the extraction cells is not equal to the weight ratio of soya solids/coffee solids in the coffee and soya base or co-extract. The extractability is the ratio between the weight of solid content of the extract and the weight of material loaded in the extraction cell. For instance, in order to yield a coffee and soya base with about as much coffee solids than soya solids, the load in the extraction cell should be from about 30% to about 40% of R&G coffee and from about 60% to about 70% of R&G soya.

In order to remove undesirable acid flavours, it may be useful to carry out a flash evaporation of the extraction liquid downstream of the hot extraction cells. Flash evaporation is done by transferring the extraction liquid having a temperature above 140°C into a flash evaporation column having a temperature below 100°C. Then the flash-evaporated extraction liquid is reintroduced into the extraction circuit. This procedure is described in more details in European patent application EP 0482236 A1.

Thereafter, any suitable concentration procedure may be carried out because the choice and design of the concentration procedure is a matter of preference and has no critical impact on the invention.

In an embodiment of the invention, the aromas are stripped off before concentration of the coffee and soya co-extract. Instead of adding back these aromas into the concentrate, as it is usually done for soluble coffee, some of the stripped aromas are discarded to reduce the acidity of the final product. Moreover, cooked and caramel flavour notes become more easily detected, which corresponds to the desired sensory attributes of the instant beverage.

Processes for stripping off and collecting the aroma from R&G coffee are well known. For instance, such a procedure is described in details in PCT publication WO 99/52378 A1.

Conversion of the concentrated coffee and soya co-extract into a powder can be achieved through various procedures such as spray-drying or freeze-drying. A freeze-drying method is described in U.S. patent US 4,324,808. For freeze drying the concentrated coffee and soya co-extract is frozen on a band at temperatures between -30 and -50°C. The product is then dried under a vacuum where the water is removed by sublimation.

For spray-drying the product is atomised into small droplets and the water in the product is removed by the hot air in a drying tower. In an embodiment of the invention, the product is spray-dried.

It is preferred that the tapped specific gravity of the powder is in the range from about 200 to about 400g/L, more preferred is a tapped specific gravity between about 250 and about 350g/L. Tapped specific gravity is referring to the gravity of the powder when compressed by vibrating the powder with 100 pushes of 10mm.

Prior to conversion of the concentrated coffee and soya co-extract into powder, some of the further ingredients mentioned above may be added to the concentrate, for instance a sweetener or buffering agents.

Specific examples are now given to further illustrate the invention.

### EXAMPLES

### Example 1 - Coffee and soya co-extract powder

Coffee and soya co-extract powder was manufactured in a co-extraction installation comprised of four hot extraction cells, a flash evaporation column and three cold extraction cells. During concentration of the co-extract, aroma stripping was carried out. The operating conditions of various trials are laid out below in Table 1.

Raw materials are R&G coffee beans and R&G soya beans. Soya beans are roasted from about 60 to 65 minutes at a maximum temperature of 200°C. The roasting weight loss is approximately 25 percent by weight. After roasting, soya is discharged into a cooling tray. The roasted soya beans are then ground to a particle size similar to that of ground coffee beans (see table 1 below). The roast degree is characterized by a reflectance measurement (color test Neuhaus, CTN) and expressed as arbitrary colour units (CTN values). The R&G soya had a CTN value of 70. Robusta coffee beans are roasted and ground to reach a CTN value comprised between 49 and 55 (very dark roast).

Prior to spray-drying the concentrated co-extract to produce the powdered coffee and soya co-extract, 0.5% Na₂HPO₄ by weight of the concentrate was added to the concentrate as a buffering agent.

**Table 1**

| **Trial** | **Unit** | **A** | **B** | **C** | **D** | **E** | **F** | **G** |
|---|---|---|---|---|---|---|---|---|
| ***Extraction cell load*** | | | | | | | | |
| Coffee load | wt% | 55 | 55 | 55 | 55 | 45 | 35 | 35 |
| Soya load | wt% | 45 | 45 | 45 | 45 | 55 | 65 | 65 |

| ***Coffee roasting and grinding*** | | | | | | | | |
|---|---|---|---|---|---|---|---|---|
| Time | min | 15.5 | 15.5 | 15 | 15 | 15 | 15 | 15 |
| Grind | mm | 2.5 | 2.5 | 2.5 | 2.5 | 2.5 | 2.5 | 2.3 |

| ***Extraction and evaporation conditions*** | | | | | | | | |
|---|---|---|---|---|---|---|---|---|
| Cycle time | min | 16 | 16 | 14 | 14 | 16 | 14 | 14 |
| Hot cells | °C | 175 | 172 | 172 | 170 | 168 | 170 | 168 |
| Cold cells | °C | 105 | 105 | 105 | 105 | 105 | 105 | 108 |
| Evap.column | °C | 98 | 98 | 98 | 98 | 98 | 98 | 98 |
| Gross yield | wt% | 47.4 | 45.8 | 43.7 | 42.7 | 38.2 | 39.2 | 38.5 |

| ***Product characteristics*** | | | | | | | | |
|---|---|---|---|---|---|---|---|---|
| Moisture | wt% | 3.5 | 3.5 | 3.5 | 3.5 | 3.5 | 3.5 | 2 |
| Density | g/L | 340 | 340 | 340 | 340 | 310 | 310 | 300 |

In Table 1, grind represents the mean value of the diameter of the ground particle. In general, the particle diameter is distributed from about 1.0 mm to about 3.5 mm, with a maximum number of particles having a diameter close to the value laid out in Table 1.

The gross yield is the weight ratio between the solid content of the co-extract and the initial load weight. The moisture is the amount of residual water in the powder co-extract, after spray drying. Density is the tapped specific gravity: it refers to the gravity of the powder when compressed by vibrating the powder with 100 pushes of 10mm.

### Example 2 - Soluble coffee-based composition

The powdered coffee and soya co-extracts (coffee and soya base) of example 1 were used to prepare a soluble coffee-based composition as indicated in Table 2 below. All percentages are by weight of the total composition.

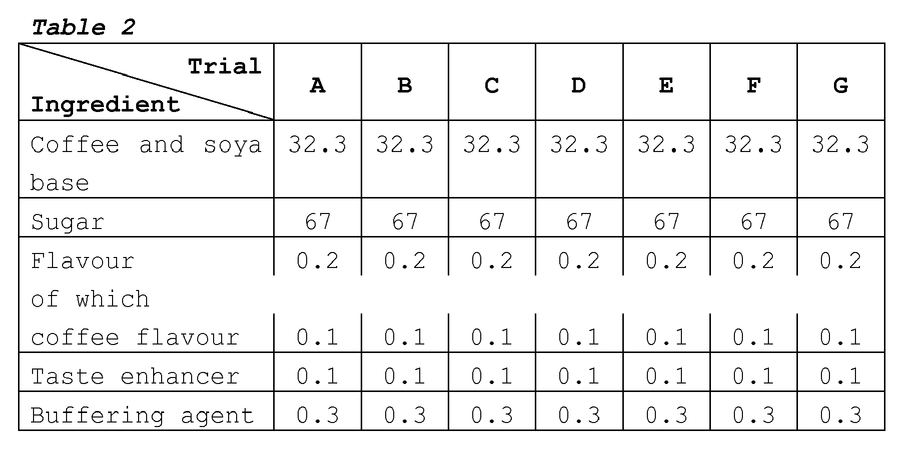

The compositions are readily soluble in hot water: an instant drink can be prepared conveniently by pouring a volume of water into a cup where a desired amount of powder composition has been spooned.

The composition can be packaged into individual sachets or in bulk packaging. Shelf life assays show that they may be stored for up to 9 months at ambient temperature and humidity (Vietnamese conditions: mean day temperature 27°C and mean humidity 80%).

### Example 3 - Confidential consumer testing

Confidential testing was conducted with untrained consumers aged between 20 and 35 years old. Both male and female were in the consumer panel. Information on the coffee consumption habits of the panellist was recorded:
- use of only roasted and ground (R&G) coffee, or of both R&G coffee and instant soluble coffee,
- preference for hot or cold coffee,
- coffee consumption frequency.

This test aimed at assessing the acceptability of instant soluble coffee according to the invention, i.e. a soluble coffee composition designed to have sensory attributes closely matching those of traditionally prepared R&G coffee.

Sensory attributes are difficult to describe precisely, as they reflect subjective perceptions of a product by a consumer:
- coffeeness: for Vietnamese drip filter users, coffeeness does not correspond to a 100% coffee, but rather to a mix between a coffee perception and other ingredients
- bitterness: this complex flavour is really liked and should be intense enough. A drink which is not bitter will not be considered as coffee
- mouthfeel: the beverage should not be watery; on the opposite, it should give a condensed or thickness feeling in the mouth
- sourness: this is strongly disliked in coffee
- aftertaste: it should be pleasant and have a long lasting intensity

A standard dose of 12g of soluble composition was poured into 50mL of hot water. The panellists were allowed to add sugar or ice to suit their consumption habits. Overall, the compositions of example 2 were received favourably although the preferred compositions were compositions F and G. This common preference was found within panellists who were used to drinking coffee hot or cold, as well as those who were not used to drink soluble coffee.

Some of the reasons for liking less the other compositions were one or the other of the following: too bitter, not thick enough, sour or acid, not aromatic enough, not dark enough.

The main reasons for accepting the compositions were that the instant coffee had just the right bitterness, a full-bodied taste, the right aroma and aftertaste, and a good dark colour.

The foregoing description of preferred embodiments of the invention is not intended to be exhaustive or to limit the invention to the disclosed embodiments. Various changes within the scope of the invention will become apparent to those skilled in the art and may be acquired from practice of the invention.

## Claims

1. A soluble coffee-based composition suitable for providing an instant coffee beverage upon reconstitution in a liquid, said composition comprising a co-extract of roast and ground coffee and soya.

2. The soluble coffee-based composition according to claim 1, wherein the composition is in powder form.

3. The soluble coffee-based composition according to claim 1 or 2, further comprising one or a plurality of the following ingredients:
- sweetener,
- buffering agent,
- flavour enhancer,
- aroma and/or flavour agent.

4. The soluble coffee-based composition according to claim 3, comprising from 20 to 60 % by weight of coffee and soya co-extract.

5. The soluble coffee-based composition according to claim 4, further comprising from 5 to 70 % by weight of sweetener, from 0 to 1 % by weight of buffering agent, from 0 to 1 % by weight of flavour enhancer and from 0 to 1 % by weight of aroma and/or flavour agent.

6. The soluble coffee-based composition according to any of the preceding claims wherein the weight ratio of soya solids with respect of coffee solids in said coffee and soya co-extract ranges from about 0.75 to about 1.3.

7. A process for preparing a soluble coffee-based composition suitable for providing an instant coffee beverage upon reconstitution in a liquid, said method comprising the steps of:
- providing a roast and ground coffee and soya co-extract,
- mixing simultaneously or successively one or a plurality of the following ingredients: sweetener, buffering agent, flavour enhancer, aroma and/or flavour agent, with said co-extract.

8. A process for manufacturing a co-extract of roast and ground coffee and soya, comprising the steps of:
- roasting green coffee beans and soya beans,
- grinding said roasted coffee and soya beans,
- co-extracting the soluble solids from said ground coffee and soya beans.

9. The process of claim 8 wherein the green coffee beans and the soya beans are roasted separately.

10. The process of claim 9 wherein the roasted coffee beans and the roasted soya beans are ground separately.

11. The process of claim 10, wherein co-extraction of the coffee and soya is realised in a series of extraction cells, each cell being filled with layers of coffee alternating with soya.

12. The process of claim 11, wherein the first and last layers in the extraction cells are layers of coffee.

13. An instant coffee beverage comprising the soluble coffee-based composition according to any of claims 1 to 6 dissolved in water.
